(19) **Europäisches Patentamt / European Patent Office / Office européen des brevets**

(11) **EP 3 841 363 B1**

(12) **EUROPEAN PATENT SPECIFICATION**

(45) Date of publication and mention of the grant of the patent:
**12.02.2025 Bulletin 2025/07**

(21) Application number: **19753124.7**

(22) Date of filing: **19.08.2019**

(51) International Patent Classification (IPC):
*G01J 3/28* (2006.01)     *G01J 3/02* (2006.01)
*G02B 17/06* (2006.01)     *G01J 3/24* (2006.01)
*G01J 3/36* (2006.01)

(52) Cooperative Patent Classification (CPC):
**G01J 3/2823; G01J 3/0208; G01J 3/24; G01J 3/36; G02B 17/0642;** G01J 2003/2826

(86) International application number:
**PCT/EP2019/072158**

(87) International publication number:
**WO 2020/038895 (27.02.2020 Gazette 2020/09)**

(54) **BROAD BAND HYPERSPECTRAL IMAGING DEVICE WITH DEMAGNIFICATION**

BREITBANDIGE HYPERSPEKTRALE BILDGEBUNGSVORRICHTUNG MIT VERKLEINERUNG

DISPOSITIF D'IMAGERIE HYPERSPECTRALE À LARGE BANDE AVEC DÉMAGNIFICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.08.2018 EP 18190015**

(43) Date of publication of application:
**30.06.2021 Bulletin 2021/26**

(73) Proprietor: **Advanced Mechanical and Optical Systems**
**4031 Angleur (BE)**

(72) Inventors:
• **MOREAU, Vincent**
  **4910 Theux (BE)**
• **BORGUET, Benoît**
  **4684 Haccourt (BE)**
• **DE CLERCQ, Coralie**
  **4050 Chaudfontaine (BE)**
• **MARESI, Luca**
  **2242 CB Wassenaar (NL)**

(74) Representative: **Gevers Patents**
**De Kleetlaan 7A**
**1831 Diegem (BE)**

(56) References cited:
FR-A1- 2 970 075     FR-A1- 2 970 075
US-B1- 6 480 333     US-B1- 6 480 333

• **DE CLERCQ CORALIE ET AL: "ELOIS: an innovative spectrometer design using a free-form grating", PROCEEDINGS OF SPIE, IEEE, US, vol. 9626, 23 September 2015 (2015-09-23), pages 96261O - 96261O, XP060061104, ISBN: 978-1-62841-730-2, DOI: 10.1117/12.2191345**
• **BETSY GOODWIN: "Design & Implementation of a New Freeform Surface Based on Chebyshev Polynomials", 25 September 2017 (2017-09-25), XP055557971, Retrieved from the Internet <URL:https://customers.zemax.com/ZMXLLC/media/PDFLibrary/WhitePapers/Design-and-Implementation-of-a-New-Freeform-Surface-Based-on-Chebyshev-Polynomials.pdf?ext=.pdf> [retrieved on 20190218], DOI: 10.1364/FREEFORM.2015.FT2B.3**
• **ANONYMOUS: "Zemax White papers", 25 September 2017 (2017-09-25), XP055557995, Retrieved from the Internet <URL:https://customers.zemax.com/ZMXLLC/media/PDFLibrary/WhitePapers/Design-and-Implementation-of-a-New-Freeform-Surface-Based-on-Chebyshev-Polynomials.pdf?ext=.pdf>**

**(Cont. next page)**

- **JACOB REIMERS ET AL:** "Freeform spectrometer enabling increased compactness", LIGHT: SCIENCE & APPLICATIONS, vol. 6, no. 7, 28 July 2017 (2017-07-28), pages e17026, XP055557398, DOI: 10.1038/lsa.2017.26
- **BERNARD SABUSHIMIKE ET AL:** "Optimization of a multiblaze grating in reflection using a free-form profile", APPLIED OPTICS, vol. 57, no. 18, 20 June 2018 (2018-06-20), US, pages 5048, XP055602687, ISSN: 1559-128X, DOI: 10.1364/AO.57.005048
- **BERNARD SABUSHIMIKE ET AL:** "Optimization of a multiblaze grating in reflection using a free-form profile", APPLIED OPTICS, vol. 57, no. 18, 20 June 2018 (2018-06-20), US, pages 5048, XP055602687, ISSN: 1559-128X, DOI: 10.1364/AO.57.005048
- **JACOB REIMERS ET AL:** "Freeform spectrometer enabling increased compactness", LIGHT: SCIENCE & APPLICATIONS, vol. 6, no. 7, 28 July 2017 (2017-07-28), pages e17026, XP055557398, DOI: 10.1038/lsa.2017.26
- **BETSY GOODWIN:** "Design & Implementation of a New Freeform Surface Based on Chebyshev Polynomials", 25 September 2017 (2017-09-25), XP055557971, Retrieved from the Internet <URL:https://customers.zemax.com/ZMXLLC/media/PDFLibrary/WhitePapers/Design-and-Implementation-of-a-New-Freeform-Surface-Based-on-Chebyshev-Polynomials.pdf?ext=.pdf> [retrieved on 20190218], DOI: 10.1364/FREEFORM.2015.FT2B.3
- **ANONYMOUS:** "Zemax White papers", 25 September 2017 (2017-09-25), XP055557995, Retrieved from the Internet <URL:https://customers.zemax.com/ZMXLLC/media/PDFLibrary/WhitePapers/Design-and-Implementation-of-a-New-Freeform-Surface-Based-on-Chebyshev-Polynomials.pdf?ext=.pdf>
- **DE CLERCQ CORALIE ET AL:** "ELOIS: an innovative spectrometer design using a free-form grating", PROCEEDINGS OF SPIE, IEEE, US, vol. 9626, 23 September 2015 (2015-09-23), pages 96261O - 96261O, XP060061104, ISBN: 978-1-62841-730-2, DOI: 10.1117/12.2191345
- **DE CLERCQ CORALIE ET AL:** "ELOIS: an innovative spectrometer design using a free-form grating", VISUAL COMMUNICATIONS AND IMAGE PROCESSING; 20-1-2004 - 20-1-2004; SAN JOSE,, vol. 9626, 23 September 2015 (2015-09-23), pages 96261O - 96261O, XP060061104, ISBN: 978-1-62841-730-2, DOI: 10.1117/12.2191345
- **BETSY GOODWIN:** "Design & Implementation of a New Freeform Surface Based on Chebyshev Polynomials", 25 September 2017 (2017-09-25), XP055557971, Retrieved from the Internet <URL:https://customers.zemax.com/ZMXLLC/media/PDFLibrary/WhitePapers/Design-and-Implementation-of-a-New-Freeform-Surface-Based-on-Chebyshev-Polynomials.pdf?ext=.pdf> [retrieved on 20190218]
- **ANONYMOUS:** "Zemax White papers", 25 September 2017 (2017-09-25), XP055557995, Retrieved from the Internet <URL:https://web.archive.org/web/20170925064706/https://customers.zemax.com/os/resources/learn/white-papers> [retrieved on 20190218]
- **JACOB REIMERS ET AL:** "Freeform spectrometer enabling increased compactness", LIGHT: SCIENCE & APPLICATIONS, vol. 6, no. 7, 28 July 2017 (2017-07-28), pages e17026, XP055557398, DOI: 10.1038/lsa.2017.26

## Description

### Technical area

The invention relates to a spectral imaging device.

### Prior art

An intended application of the invention is for example the observation of earth, in orbit or airborne, in a spectral range from visible to infra-red.

A hyperspectral imager is an optical assembly that makes it possible to produce three-dimensional images of a scene: namely the two classical spatial dimensions (X, Y), plus a spectral dimension λ, corresponding to the decomposition in the wavelength domain of the light radiated by each point of the object.

There are several types of hyperspectral imagers distinguished by the scanning method of each point in the scene (point-by-point scanning, line-by-line scanning, or full-field acquisition) and by the process used to decompose light in the different wavelengths (diffraction, refractive dispersion, interferometry). The present invention relates to "pushbroom" type instruments using a diffraction grating to decompose light. This configuration is one of the most commonly used in earth observation in space (orbit) or airborne, in a spectral range from visible to infra-red.

Known hyperspectral imagers are either too bulky or too restrictive regarding the observed wavelength range. There is no compact hyperspectral imager providing a broad spectral range, for example from UV to short wavelength infrared (SWIR), without compromising hyperspectral image quality.

### Summary of the invention

According to a first aspect, one of the objects of the invention is to provide a spectral imager with correction of in-field aberrations (typically astigmatism) over a broad spectral range. Another aspect of the invention is to provide a compact spectral imager with a broad range of wavelength detection. To this end, the inventors suggest a spectral imaging device with the features of claim 1.

Even more than in a conventional imaging system, i.e. Offner spectrometer, the amount of collected photons is a key factor in the field of the invention, for keeping the measurement noise as low as possible. Indeed, the light energy radiated by the object is divided into a very large number of spectral bands (from 20 to 1000). To increase the amount of photons collected, hyperspectral sensors often use larger pixels than conventional sensors. But the solution of using larger pixels does not allow to achieve a compact design with good resolution which requires a high density of pixels per unit area. The claimed invention allows to modify the optical design of the Offner relay, so as to realize a magnification different from 1 (example 2:1 or 3:1). This optical condenser makes it possible to use a wider slit, which therefore collects more light for a given opening. A reduced image of this wide slit is then produced on the sensor, whose pixels can then be smaller while maintaining a good signal to noise ratio. The present invention thus allows to provide a high signal to noise ratio and to use relatively small detectors without optical aberrations. Thanks to the high signal to noise ratio and correction of in-field aberrations the present invention allows to provide clear hyperspectral images with a high contrast.

The inventors propose a new design for a family of imaging spectrometers composed of two concave mirrors and a convex diffraction grating which surface has a complex invariant shape class (without symmetry of rotation or translation). This arrangement is distinguished from the conventional spectro-imager by introducing an additional demagnification function between the object (usually an input slit) and the image on the detection means. The invention allows to produce on a sensor, the image of an object, generally a narrow slit, which selects the unidimensional field of view of the spectro-imager. A diffraction grating, deposited or etched on the convex mirror, performs the spectral dispersion function. The dispersed image will represent a succession of lines, each being an image of the entrance slit in a different wavelength. A progressive scan of the scene makes it possible to reconstruct the second spatial dimension.

The claimed invention relates to the improvement of the optical design of a spectral imager using a convex diffraction grating and two concave mirrors (known as Offner-Chrisp). The invention is to introduce an important demagnification function (higher than 1.3) by the judicious choice of the radii of curvature of the two concave mirrors such that the ratio between these two radii of curvature is approximately equal to the desired demagnification factor. This is made possible by the replacement of the spherical convex grating by a convex grating of complex shape (without rotation invariance)

For a given spatial and spectral resolution, these modifications lead to:

- an increase equivalent to the square of the de-magnification factor, of the number of photons collected per unit area and wavelength on the sensor (spectral irradiance). This allows, at choice,

- to increase the signal-to-noise ratio (proportional to the square root of illumination),
- to decrease the integration time and thus reduce motion blur;

- an additional freedom in the choice of the focal length of the input telescope: this offers a greater flexibility when one wishes to share the image formed in the focal plane of the telescope between different instruments (ex: Spectro-imager and panchromatic sensor, or several spectro-imagers covering different wavelength ranges);
- a significant improvement in optical performance over an extended field of view, thanks to the reduction of field astigmatism;
- a significant improvement in optical performance over an extended spectral range, thanks to the reduction of spectral astigmatism.
- with equal performance, to a reduction in size, and therefore of weight, of the spectro-imager, which is an essential advantage for space applications...

Several optical relay designs exist, which can be classified according to the type of surface on which the grating is engraved, flat, concave or convex. An "Offner" montage uses two concentric surfaces: a convex spherical lattice and a concave spherical mirror. These two surfaces constitute a 1:1 magnification optical relay.

Convex diffraction gratings are used in an Offner spectral imaging device. This configuration offers a relatively large field of view and relatively low aberrations. The advantage of an Offner type spectral imaging device are that it operates with a relatively low F-number ($\geq$ f/2.5), it accepts a long slit length while maintaining a compact size. Offner type spectral imaging device have a central position between the two concave mirrors which is the pupil stop of the system and where it is the most suitable place to correct in-field aberrations and/or distortion. The use of different first and second concave mirrors allow to further reduce smile and keystone distortions. Using a convex grating with a complex shape belonging to the complex invariant shape class at the pupil stop is advantageous for correction of in-field aberrations over a broad spectral range.

Hyperspectral imaging offers extremely diverse and varied application prospects in environmental and land use management for agriculture, forestry, limnology, geology and urbanology. The claimed invention allows to significantly reduce the volume and mass of hyperspectral instruments and make them compatible with small satellites (SmallSat) much cheaper to develop and to put into orbit. Such small satellite platforms are often foreseen in constellation.

The luminous energy received on the image plane per unit area in a given spectral band, called spectral illumination, increases with the square of the demagnification factor. The signal-to-noise ratio is improved proportionally to this demagnification factor. The use of a convex reflective diffractive grating with a reflective surface defined by a complex invariant shape class provides a better correction of field aberrations, chromatic aberrations and essentially third- and fifth-order astigmatism. This allows, for a given dimension of the input slit, to reduce significantly the size of the instrument without loss of image quality. This also makes it possible, for a given resolving power, to cover a wider spectral range, and in particular all visible near-infrared (VNIR) and short-wave infrared (SWIR) wavelengths.

The image plane is located at the first matrix detection means. The object plane is located at the slit. The claims invention is about modifying the design of the concentric spectro-imagers with convex gratings (so-called Offner-Chrisp) so as to add to them a function of demagnification (reduction of size between the object and its image) in order to improve their radiometric performance and reduce their volume (and consequently their weight). This evolution is not easy to obtain because it requires modifying the "form class" of the convex reflective diffractive grating, otherwise the resolution of the image is strongly degraded regarding the spectral range of the instrument (unless the factor of demagnification is kept at values sufficiently close to 1).

Generally, one can define three classes of shapes for non-planar optical surfaces (according to ISO Standard 17450-1: 2011):

1. Class of invariance Spherical: surfaces presenting an invariance according to the three axes of rotation around a point;
2. Class of invariance of revolution: surfaces having an invariance around an axis of rotation (Conic, Aspheric, Toroidal or Anamorphic);
3. Invariant Complex: Areas with no degree of invariance: Orthogonal Polynomial, Radial Polynomial (Zernike functions), B-Spline, ...

In terms of manufacturing and metrology, the difficulty is also growing as the class complexity becomes higher. The solution to the problem of demagnification can be partially solved by replacing the spherical convex grating with an anamorphic (solution for a moderate spectral range) or radial polynomial convex grating (solution for an extended spectral range).

The invariant complex shape class of the convex grating of the invention allows to reach higher demagnification factor with lower chromatic aberration and field aberration, and with a relatively large spectral range than with an aspherical grating (revolution invariance) or with a toroidal grating (invariance of revolution). The invention consists of a spectro-imager design including a demagnification function and an extended corrected field with the use of a complex invariant grating.

The invention can be applied to different variants of the spectrometer, such as those described below, including multi-blaze grating or using several diffraction orders simultaneously, but also spectrometers with high spectral resolution (R = 2000 or more).

The inventors propose several preferred embodiments comprising optional features, where some of them can be combined.

The spectral imaging device is preferably coupled to an input telescope. The spectral imaging device is aligned in the focal plane of the telescope. The entrance slit of the spectral imaging device allows to select a single line of the image formed by the telescope. The slit width ($l$) of the spectral imaging device, the telescope focal length ($F_{Tel}$) and the distance to the observed scene (D) define the spatial sampling of the instrument (SSD: Spatial Sampling Distance):

$$SSD = \frac{D.L}{F_{TEL}}$$

The imaging spectrometer (or spectro-imaging device) allows to measure the spectral radiance at each of the points of the entrance slit. The spectro imaging device of the invention is an optical relay including a diffraction grating, capable of angularly separating the different wavelengths. This optical relay forms an image of the slit on a sensitive detector in the target wavelength range, and converts the angular separation of the spectrum into a spatial separation along an axis perpendicular to that of the slit. An image in two dimensions is thus obtained: a spatial dimension parallel to the slit and a spectral dimension perpendicular to it.

Spectral Sampling Interval ($SSI$) depends on the angular dispersion of the diffraction grating $\zeta$ (rad / nm), the focal length of the second concave mirror ($F_{im}$) and the size of the pixel ($P_{ix}$):

$$SSI = \frac{Pix}{\zeta . F_{im}}$$

Spectral Sampling Interval ($SSI$) is also expressed in terms of resolving power (R) around the average wavelength $\lambda$:

$$R = \frac{\lambda}{SSI}$$

The number of resolved bands (NB), often corresponding to the number of useful pixel lines on the detector, is the ratio between the spectral range covered by the instrument and the Spectral Sampling Interval ($SSI$):

$$NB = \frac{\lambda_{max} - \lambda_{min}}{SSI}$$

Preferably said demagnification is higher than 1.5, more preferably higher than 2 and even more preferably higher than 3. Preferably the demagnification is lower than 5 and preferably lower than 4. For example, the demagnification is 1.66.

Preferably, said reflective surface having a complex invariant shape class is defined in a three dimensional space with the equation:

$$z = \frac{c\, r^2}{1 + \sqrt{1 - (1+k)c^2 r^2}} + \sum_{i=1}^{N=2,3} \alpha_i r^{2i} + \sum_{i=1}^{M} A_i Z_i(\rho, \varphi)$$

where z is the surface sag (z-coordinate) at the point of polar coordinate ($r, \varphi$), c is the curvature (the reciprocal of the radius of curvature) and k is the conic constant, $\alpha_i$ is the ith even aspherical coefficients, $A_i$ is the coefficient on the ith Zernike polynomial, $z_i$ is the ith Zernike polynomial, $\rho$ is the normalized radial coordinate such that $\rho = \frac{r}{R}$ where R is the useful radius of the surface, preferably M being an integer comprised between 4 and 36.

The two first terms of the equation define an aspherical surface (rotationally invariant), and the third term add a invariant complex shape contribution defined by a series of Zernike polynomials $Z_i$. More precisely, the first term defines the equation of a sphere and the second term defines aspheric coefficients. Preferably said aspheric coefficients are given by an even-order polynomial. Preferably, said Zernike polynomials allow to break the spherical symmetry of said reflective surface.

The Zernike polynomials are a sequence of polynomials, with two polar variables $(r, \varphi)$, that are continuous and orthogonal over a unit circle. As such there can be used to define any invariant complex surface with a circular boundary. Preferably, M is an integer comprised between 4 and 36. Preferably N is equal to 2 or 3. Preferably, $\alpha_1 = 0$.

Preferably, said diffractive grating is a blazed grating.

Preferably, said blazed grating has a constant line spacing d, said line spacing being comprised between 50 $\mu$m and 0.75 $\mu$m and more preferably comprised between 30 $\mu$m and 8 $\mu$m.

A blazed grating has a constant line spacing , determining the magnitude of the wavelength splitting caused by the grating. The grating lines possess a triangular, saw tooth-shaped cross section, forming a step structure. The steps are tilted at the so-called blaze angle $\theta_B$ with respect to the grating surface. Accordingly, the angle between step normal and grating normal is $\theta_B$. Commonly blazed gratings are manufactured in the Littrow configuration. The blaze angle is optimized to maximize efficiency for the wavelength $\lambda_b$ of the used light.

$$sin\theta_B = \frac{\lambda_b}{2d}$$

Descriptively, this means $\theta_B$ is chosen such that the beam diffracted at the grating and the beam reflected at the steps are both deflected into the same direction.

The advantage of a constant line spacing grating is to allow maximum optical power in one desired diffraction order for a given wavelength range.

Preferably, said blazed grating has a step height h comprised between 2.5 $\mu$m and 0.1 $\mu$m, more preferably comprised between 1.5 $\mu$m and 0.15 $\mu$m, and even more preferably between 1 $\mu$m and 0.2 $\mu$m.

Preferably, said line spacing d being comprised between 1.5 $\mu$m and 0.75 $\mu$m, more preferably between 1.1 $\mu$m and 0.9 $\mu$m, and even more preferably d being equal to 1 $\mu$m.

Such line spacing is particularly well suited for having a spectral imaging device with very high spectral resolution but for a relatively narrow range of wavelength. Thus the spectral imaging device allows for very high resolution spectroscopy with bands from 0.1 to 0.5 nm, over a limited spectral range, for example between 0.6 $\mu$m to 0.8 $\mu$m. Preferably this embodiment allows to discretize bands with a spectral width of 0.1 nm to 0.5 nm in a wavelength range of about 200 nm in the range of wavelength 400 nm to 2500 nm. In this embodiment, a demagnification factor of 3:1 can be utilized by putting the constitutive elements with the relative distance allowing 3:1. To make such a design (low line spacing on the grating, demagnification 3:1), the slit can be positioned such that in incoming light beam from the slit 40 toward the first concave mirror 10 passes between the second concave mirror 30 and the convex reflective diffractive grating 20 making the design of this embodiment compact. This embodiment can achieves a resolution of 0.1 nm for 10$\mu$m pixels.

In a preferred embodiment of the invention, several gratings having different blaze angles are engraved on the convex surface of said reflective diffractive grating. Preferably, said blazed grating comprises a first grating portion with a first blaze angle $\theta_{B1}$ and a second grating portion with a second blaze angle $\theta_{B2}$, said first blaze angle $\theta_{B1}$ being different than said second blaze angle $\theta_{B2}$. More preferably said blazed grating further comprises a third grating portion with a third blaze angle, and even more preferably said blazed grating further comprises a fourth grating portion with a fourth blaze angle. Preferably said gratings with different blaze angles are best suited for spectral imaging devices with a band width resolution above 1 nm per pixel and more preferably of 2.5 nm per pixel. Preferably, the first, second, and third blaze angle having different values. Preferably, the first, second, third and fourth blaze angle having different values.

For example, $\theta_{B1}$ are comprised between 0.4° and 2.3° and more preferably between 0.5° and 1.5°.

The advantage of a two grating portion with the same line spacing but with a different step height is to allow a maximized distribution of the optical power in one desired diffraction order or more diffraction orders for a given wavelength range.

Preferably, said first grating portion and said second grating portion covering essentially said reflective surface, said first grating portion covering a surface $S_1$ and said second grating covering a surface $S_2$ such that the distribution of $S_1$ and $S_2$ over said reflective surface is such that:

$$0.2 < \frac{S_1}{S_2} < 5.$$

For example, said first grating portion and said second grating portion covering essentially said reflective surface have a distribution over said reflective surface of 2/3 for said first grating portion and 1/3 for said second grating portion.

The advantage of having gratings with different blaze angles is to allow a better distribution of the diffracted light aver the wavelength range to be covered. The sum of the efficiency curves of each of these gratings allows to cover a wavelength range from 0.4 $\mu$m to 2.5 $\mu$m and more preferably a wavelength range from 901 to 2500 nm, for example a wavelength range of 901 nm to 2500 nm. The advantage of using these gratings is to cover mentioned wavelength ranges more effectively, either by using a single diffraction order or even more effectively, by exploiting, for example, the diffraction orders +1 or -1 in the SWIR and +2 or -2 in the VNIR.

For example, said second grating surface portion is surrounded by said first grating surface portion on said reflective surface.

For example, when using the diffraction orders +1 or -1 and +2 or - 2, these two orders can be partially superimposed spatially, so a dichroic separator is necessary to address them separately with said first and second matrix detection means.

Preferably, said spectral imaging device further comprises a second matrix detection means and a dichroic filter positioned between said second concave mirror and said first matrix detection means such that:

- a first spectral range fraction of said light beam after its diffraction by said convex reflective diffraction grating and its reflection by said second concave mirror is transmitted toward said first matrix detection means for being detected by this one and
- a second spectral range fraction of said light beam after its diffraction by said convex reflective diffractive grating and its reflection by said second concave mirror is reflected toward said second matrix detection means for being detected by this one.

Here the term reflected means that part of the light beam is directed on the same side of the filter.

For example, the first fraction of said light beam transmitted by the dichroic filter toward the first matrix detection means for being detected by this one has a wavelength range of at least 900 to 2500 nm, preferably of at least 950 nm to 2450 nm corresponding to the first order diffraction. For example the second fraction of the light beam reflected by the dichroic filter toward the second matrix detection means for being detected by this one has a wavelength range of at least 350 to 950 nm, preferably of at least 400 nm to 900 nm corresponding to the second order diffraction.

Preferably, the first spectral range fraction of said light beam is comprised in the SWIR wavelength range, in particular from 950 nm to 2450 nm, and originating from a diffracted order -1 or +1 and the second spectral range fraction of said light beam is comprised in the VNIR wavelength range, in particular from 400 nm to 950 nm, and originating from a diffracted order -2 or +2, said diffracted orders being diffracted orders generated by the convex diffraction grating.

Preferably, said spectral imaging device further comprises a mirror such that it is positioned to reflect said light beam from said slit to said first concave mirror. Such mirror allows a more compact spectral imaging device.

Preferably, said slit having a slit F-number and said first or second detection means having a detection means F-number such that:

$$demagnification\ factor = \frac{slit\ F-number}{detection\ means\ F-number},$$

said slit F-number being comprised between 12 and 3, preferably between 5 and 3 and said detection means F-number being comprised between 4 and 2, preferably between 2.5 and 2, for said demagnification factor being larger than 1.5.

Preferably, said matrix detection means comprises a matrix of pixels defining pixel lines and pixel columns, pixel columns defining spatial position and pixel lines defining spectral information, said matrix detection means comprising at least 200 pixel lines, preferably at least 400, and even more preferably at least 800.

Preferably, said spectral imaging device can be included in a rectangular parallelepiped having main dimensions of 250 mm x 200 mm x 100 mm, preferably of 250 mm x 250 mm x 250 mm.

## Brief description of the figures

These aspects of the invention as well as others will be explained in the detailed description of specified embodiments of the invention, with reference to the drawings in the figures, in which:

- Fig. 1 shows an example of a spectral imaging device;
- Fig. 2 shows another example of a spectral imaging device;
- Fig. 3 shows an exemplary embodiment of the spectral imaging device according to the invention;
- Fig. 4 shows an exemplary use of the spectral imaging device according to the invention;

- Fig. 5 shows an exemplary embodiment of the convex reflective diffractive grating according to the invention;
- Fig. 6 shows another exemplary embodiment of the convex reflective diffractive grating according to the invention;
- Fig. 7a and 7b shows preferred embodiment of the convex reflective diffractive grating according to the invention.

The drawings in the figures are not to scale. Generally, similar elements are designated by similar reference signs in the figures. The presence of reference numbers in the drawings is not to be considered limiting, even when such numbers are also included in the claims.

**Detailed description of possible embodiments of the invention**

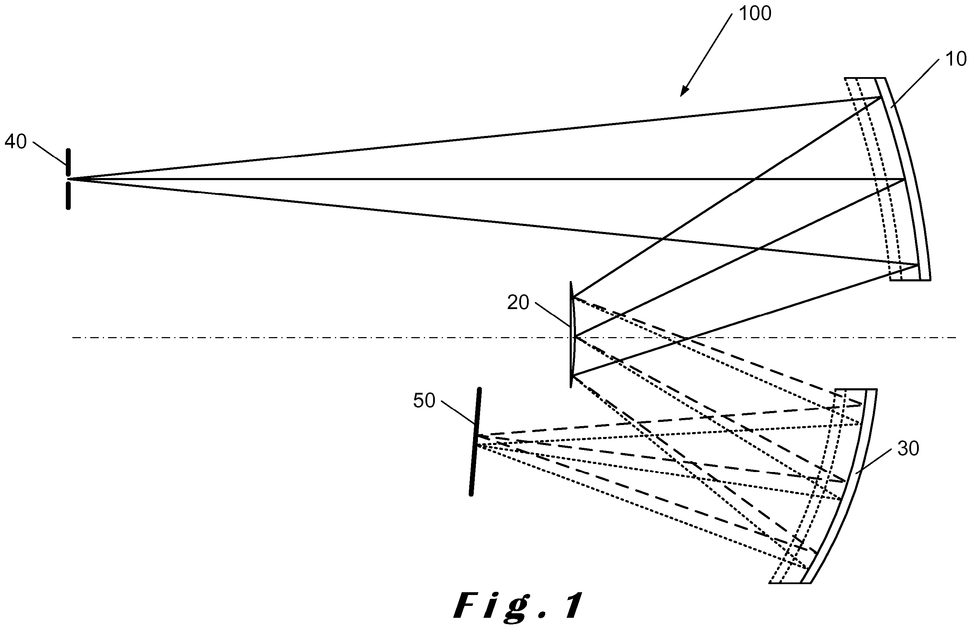

Figure 1 shows an example of a spectral imaging device 100. The system spectral imaging device 100 comprises a slit 40 with an aperture width. The aperture width can be modified depending on the demagnification of the spectral imaging device 100, signal to noise ratio or type of observed object. For example the slit has a length of comprised between 80 mm and 40 mm, more preferably comprised between 70 mm and 50 mm and for example of 60 mm and a width comprised between 50 $\mu$m and 10 $\mu$m, more preferably comprised between 40 $\mu$m and 20 $\mu$m and for example a width of 30 $\mu$m.

Light enters the spectral imaging device 100 from the slit 40. Preferably, an optical system is placed in upstream of the spectral imaging device 100 such as a telescope in order to form an image of the observed scene on the entrance slit. The light beam entering the spectral imaging device 100 via the slit is directed onto the first concave mirror 10. The light beam is then reflected by the first concave mirror 10 towards the convex diffractive reflective grating 20. The light beam is then diffracted and reflected by the convex diffractive reflective grating 20 in the direction of the second concave mirror 30.

For the reflective grating 20 of the invention the light beam is diffracted by the saw tooth-shaped cross section, forming a step structure and then back-reflected into the direction of the second concave mirror 30. The diffracted light back-reflected into the direction of the second concave mirror 30 is reflected by the second concave mirror 30 and focused onto a first matrix detection means 50.

First 10 and second 30 concave mirrors make possible to reflect and focus light with wavelengths in the range 350 nm to 2.5 $\mu$m. First 10 and second 30 concave mirror are preferably non-symmetrical. For example their focal lengths are different, their aperture are offset with respect to their axis of symmetry represented by a dot-dashed line, and their distance to the convex diffractive reflecting grating 20 are different.

The spectral imaging device 100 is configured such that it allows a demagnification higher than 1 and preferably higher than 1.5. For example starting from a known Offner-Crisp type spectrometer, a demagnification is obtained by considering a significantly different radius of curvature for the first concave mirror 30 and for the second concave mirror 30, and moving away the slit 40. The demagnification can be defined by considering the length A of the entrance slit 40 and the length B of its image on the first matrix detection means 50, such that the demagnification is given by the ratio A/B. For example A is in the range 100 mm to 30 mm, preferably in the range 70 mm to 50 mm, for example B is in the range 50 mm to 20 mm and preferably in the range 35 mm to 25 mm. Preferably the demagnification achievable with the spectral imaging device 100 is comprised between 4.5 and 1.3, preferably comprised between 3.5 and 1.5 and more preferably comprised between 1.75 and 2.75.

The spectral imaging device of Figure 1 allows to obtain a demagnification higher than 1 for detecting a range of wavelengths preferably comprised between 400 nm and 2500 nm and more preferably comprised between 400 nm and 2500 nm. The advantage of the embodiment of Fig. 1 is to allow reduced field aberration and chromatic aberration such as to obtain a keystone and smile as low as possible, preferably both lower than 2 $\mu$m. Fig. 1 is a robust embodiment for allowing detection of a wide range of wavelengths with a relatively good spectral resolution, for example with a spectral resolution of 5 nm over a range of wavelength of 450 to 2500 nm and more preferably of 2.5 nm over a range of 450 to 900 nm.

For the spectral imaging device of Figure 1, the slit F-number is 5 and the detection means F-number is 2.5.

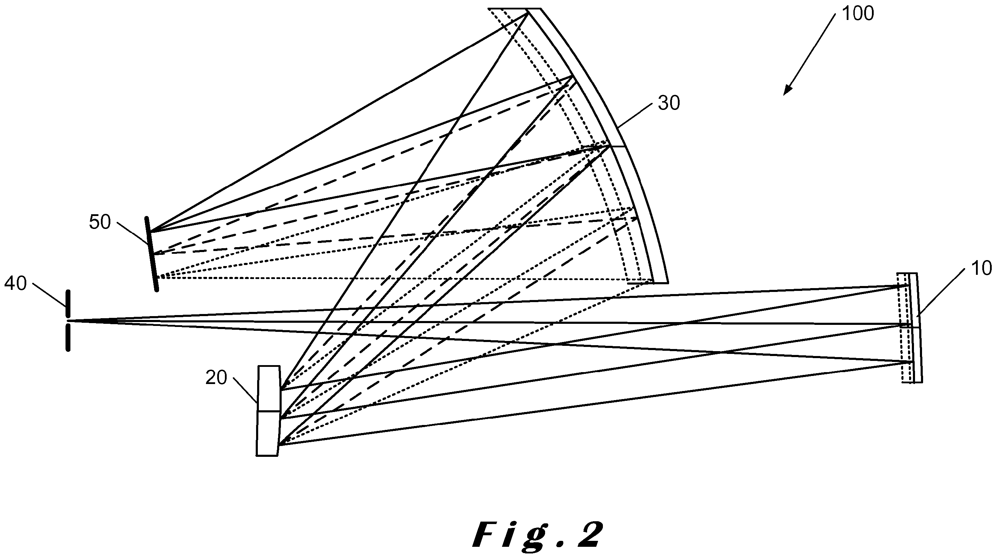

Figure 2 shows another example of a spectral imaging device 100. Fig. 2 shows a design for a spectro imager 100 with very high spectral resolution but for a relatively narrow range of wavelength. The spectro imaging device 100 of Fig. 2 allows for very high resolution spectroscopy with bands from 0.1 to 0.5 nm, over a limited spectral range, for example between 0.6 $\mu$m to 0.8 $\mu$m. Fig. 2 preferably allows to discretize bands with a spectral width of 0.1 nm to 0.5 nm in a wavelength range of about 200 nm in the range of wavelength 400 nm to 2500 nm.

For the spectral imaging device of Fig. 2, to achieve such a high spectral resolution, the grating has a much higher spatial frequency than for the embodiment of Fig. 1. The grating 20 frequency for Fig.2 is up to 1200 lines / mm. For such a grating 20, the diffraction angle of the order -1 is much larger than in Fig. 1. For example the diffraction angle of the order -1 is of about 57°. It is then more advantageous to work with the order 1, in a so-called "Littrow" configuration. In the spectral imaging device of Fig. 2, a demagnification factor of 3:1 is represented with the relative distance of the constitutive elements. The peculiarity of this design is that it is naturally compact. It achieves a resolution of 0.1 nm for 10 $\mu$m pixels. In the spectral imaging device of Fig. 2, the slit is positioned such that in incoming light beam from the slit 40 toward the first concave mirror 10 passes between the second concave mirror 30 and the convex reflective diffractive grating 20. For the spectral imaging device of Fig. 2, the slit F-number is 11 and the detection means F-number is 4.

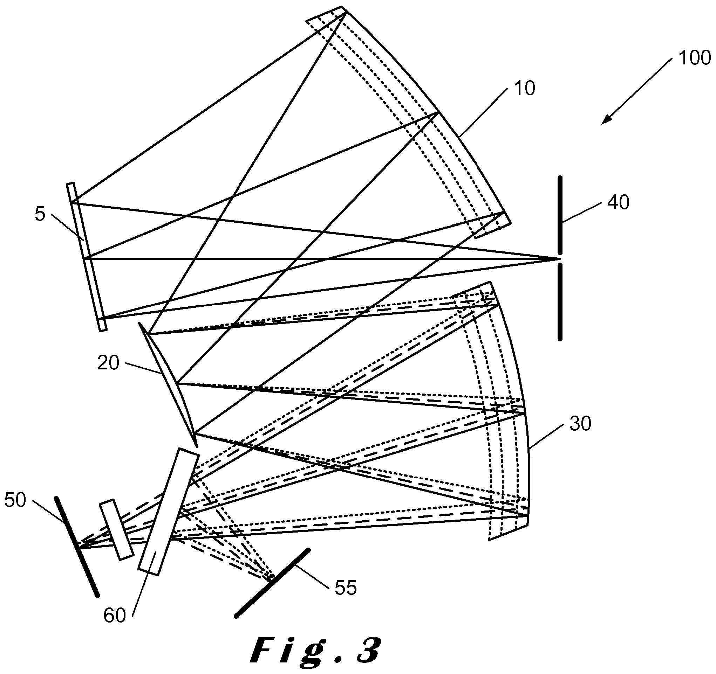

Figure 3 shows an exemplary embodiment of the spectral imaging device 100 of the invention. This embodiment of the spectral imaging device 100 has been designed to cover a wider spectral range than design of Fig. 1, between 0.4μm and 2.4μm. In Fig. 3, the optical condensation factor or demagnification factor is 1.7:1 and the convex grating shows variable step height h which are adjustable locally to optimize diffraction efficiency in visible (VIS) and short-infrared wavelengths (SWIR: Short Wavelength Infra-Red) for orders -2 and -1 respectively. At the focal plane these two orders are separated by means of a dichroic plate or dichroic filter, towards two different detectors, namely a first matrix detection means 50 and a second matrix detection means 55. The spectral resolution is 2.5 nm with a wide wavelength range. The convex grating in this embodiment of Fig. 3 has a line spacing in the range of 10 μm to 30 μm and preferably 20 μm. According to the invention, the slit F-number is 3.6 and the detection means F-number is 2.1.

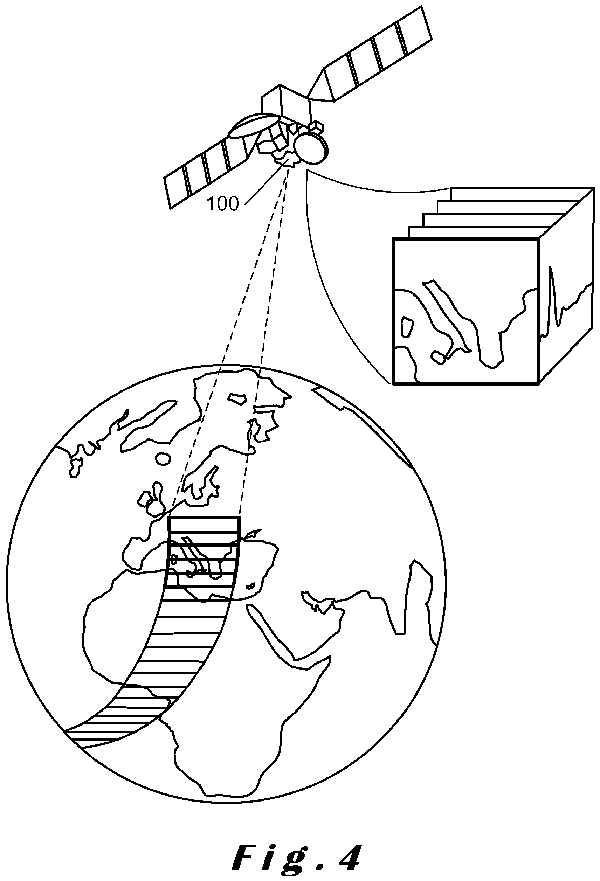

Figure 4 shows an exemplary use of the spectral imaging device 100 of the invention on-board a satellite being in orbit around a planet. The spectral imaging device 100 is able to detect line by line the planet surface. Following an orbital motion, the spectral imaging device 100 of the invention is able to detect a strip at the planet surface. Thanks to the relative motion of the satellite with the planet, successive strips can be analysed by the spectral imaging device of the invention and stitched together to form an image in two dimensions plus a spectral dimension. The image in two dimension is represented by the square image representing a detail of the planet surface. The spectral dimension is represented by the successive images, each in a different wavelength and reprinted one behind the other. Basically for a spectral resolution of 10 nm, there exist on two dimensional image every 10 nm of the spectral range covered by the spectral imaging device 100. The diagram showed along the axis representing the successive images one behind the other represents for example an average value of the two dimensional image for the spectral range covered by the spectral imaging device 100. In this configuration, the spectral imaging device creates a line image which is swept relative to the planet in "pushbroom" fashion so as to create a three-dimensional data structure (X, Y, λ) represented schematically successive images one behind the other. The main advantage of the spectral imaging device of the invention for such a "pushbroom" type of imager, is to allow a better signal to noise ratio thus allowing sharper images because of the reduced exposure time for each line. A too long exposure time introducing blurring in the three-dimensional data images. The spectral imaging device 100 of the invention allowing a decrease of the exposure time thanks to the high demagnification allowed by the convex grating with a invariant class shape surface 20.

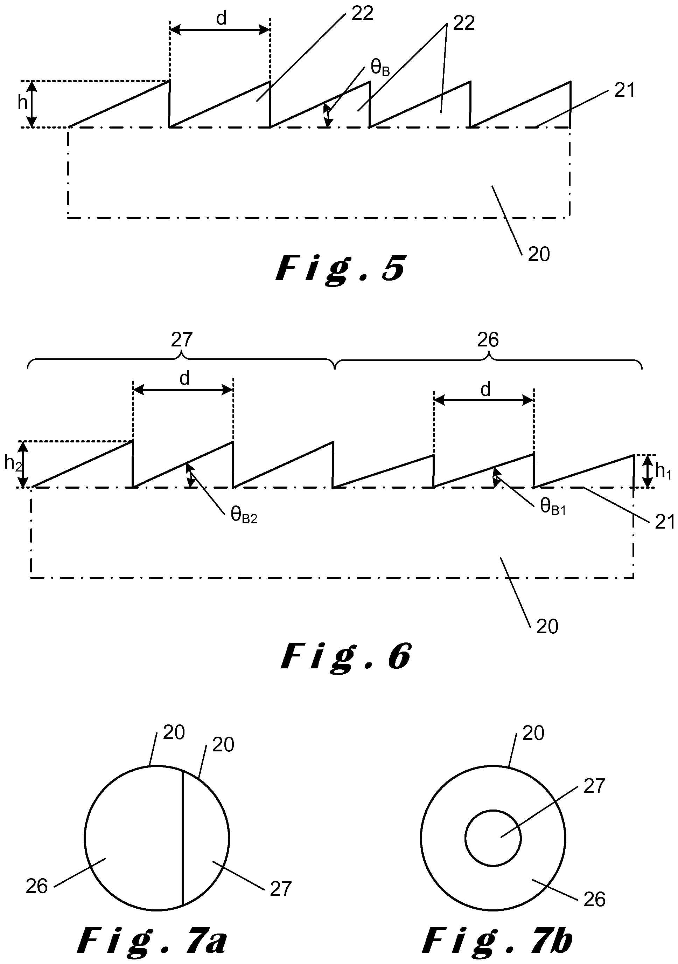

Figure 5 shows a preferred embodiment of the convex reflective diffractive grating 20 according to the invention. The grating 20 is a blazed grating engraved on a convex surface 21. The engraving forms saw tooth-shaped cross section, forming a step 22 structure. The steps are tilted at the blaze angle $\theta_B$ with respect to the grating surface 21. Accordingly, the angle between step normal and grating normal 21 is $\theta_B$. The blazed grating 20 has a constant line spacing d, determining the magnitude of the wavelength splitting caused by the grating. Accordingly a step height h can be derived from the blaze angle $\theta_B$ and the line spacing d. Preferably, a step comprises the rising feature and the step jump having a height h. The step edges, namely the start of the rising feature and the bottom of the step jump are as represented on Fig. 5 aligned with the surface 21. The steps cross section is preferably triangular. The grating surface 21 defines the overall surface of the grating 20. The surface 21 could also be taken parallel to the actual surface 21 but being secant with the top of each step jump. Such a surface would actually be the original surface of the grating before engraving of the grating in a saw tooth-shaped fashion.

Figure 6 shows a preferred embodiment of the convex reflective diffractive grating 20 according to the invention. The grating 20 is a blazed grating engraved on a convex surface 21. The engraving forms saw tooth-shaped cross section, forming a step 22 structure with a first grating portion 26 having a first blaze angle $\theta_{B1}$ and a second grating portion 27 having a second blaze angle $\theta_{B2}$, said first blaze angle $\theta_{B1}$ being different than said second blaze angle $\theta_{B2}$. The steps of the first 26 and second 27 portions are tilted at the blaze angle $\theta_{B1}$, $\theta_{B2}$ with respect to the grating surface 21. The blazed grating 20 has a constant line spacing d, determining the magnitude of the wavelength splitting caused by the grating. Accordingly, two step heights $h_1$ and $h_2$ can be derived from the two blaze angle $\theta_{B1}$, $\theta_{B2}$ and the line spacing d. Preferably, a step comprises the rising feature and the step jump having a height $h_1$ or $h_2$. The step edges, namely the start of the rising feature and the bottom of the step jump are as represented on Fig. 5 aligned with the surface 21. The steps cross section is preferably triangular. The grating surface 21 preferably defines the overall surface of the grating 20. In other embodiment such a dual blaze grating has the top of the steps aligned at the grating surface 21. In a preferred embodiment such a dual blaze grating the steps have equal average heights.

Figure 7a and 7b show two embodiments of the convex reflective diffractive grating 20 described in Fig. 6 having a first grating portion 26 with a first blaze angle $\theta_{B1}$ and a second grating portion 27 with a second blaze angle $\theta_{B2}$. In Fig. 7a and 7b, the first grating portion 26 and the second grating portion 27 cover essentially the reflective surface 21. The first grating portion 26 covers a surface $S_1$ and the second grating covering a surface $S_2$ such that the distribution of $S_1$ and $S_2$ over said reflective surface is such that $$0.2 < \frac{S_1}{S_2} < 5$$ . In Fig. 7a, this ratio is achieve with the first 26 and second 27 grating portion being placed next to each other on the reflective surface 21. The demarcation line could be of any shape: straight, curved, free-form. In Fig. 7b, the ratio S1/S2 is achieved with the and second 27 grating portion being surrounded by the first grating portion 26. The demarcation line could be of any shape: round, ellipsoid, polygonal or even free-form. Any other distribution of the first 26 and second 27 grating portion on the reflective surface 21 are possible, for example alternating several first 26 and second 27 portion with several demarcation line could foresee. Ultimately a grating with alternating blaze angle $\theta_{B1}$, $\theta_{B2}$, $\theta_{B1}$, $\theta_{B2}$ could be used.

The grating substrate is made of Kanigen (NiP) plated aluminium 6061T6 alloy and diamond machined. The pattern of the grating is engraved on a complex invariant shape class substrate. The diamond machining of the optical surface of the grating is performed on 5 axes ultra-precision lathe, in two steps:

- machining of the substrate as a complex invariant shape class part (4 or 5 axes machining). The surface is positioned accurately (<10 $\mu$m in each direction) thanks to the mechanical reference system. The error on the surface form accuracy with respect to the theoretical complex invariant shape class has been measured to be lower than 50 nm RMS;
- machining of the grating grooves. The orientation of each groove is maintained constant with respect to the normal of the surface. In other words, the groove orientation constantly varies on the grating with respect to a fix axes system. The positioning of the grooves is done by accurately positioning the optical surface of the substrate with respect to the machine axes system thanks to the mechanical reference of the part.

The present invention has been described with reference to a specific embodiments, the purpose of which is purely illustrative, and they are not to be considered limiting in any way. In general, the present invention is not limited to the examples illustrated and/or described in the preceding text. Use of the verbs "comprise", "include", "consist of", or any other variation thereof, including the conjugated forms thereof, shall not be construed in any way to exclude the presence of elements other than those stated. Use of the indefinite article, "a" or "an", or the definite article "the" to introduce an element does not preclude the presence of a plurality of such elements. The reference numbers cited in the claims are not limiting of the scope thereof.

The invention is defined by the following claims:

## Claims

1. Spectral imaging device (100) comprising:

    - a slit (40) for directing part of a source light beam inside said spectral imaging device (100), said slit having a slit length A;
    - a first concave mirror (10);
    - a convex reflective diffraction grating (20) comprising a reflective surface (21) on which a diffractive grating (22) is formed;
    - a second concave mirror (30);
    - first matrix detection means (50);

        said slit (40) and said first concave mirror (10) being configured such that said part of a source light entering the spectral imaging device (100) from said slit (40) is directed towards said first concave mirror (10);
        said first concave mirror (10) and said convex reflective diffraction grating (20) being configured such that said first concave mirror (10) is able to reflect a light beam originating from said slit (40) towards said convex reflective diffractive grating (20);
        said convex reflective diffraction grating (20) and said second concave mirror (30) being configured such that said convex reflective diffraction grating (20) is able to reflect and diffract incoming light from said convex reflective diffraction grating (20) towards said second concave mirror (30);
        said second concave mirror (30) and said matrix detection means (50) being configured such that said second concave mirror (30) is able to reflect incoming light from said second concave mirror (30) towards said first matrix detection means (50);
        wherein said reflective surface (21) of said convex reflective diffraction grating (20) is defined by a complex invariant shape class;
        wherein
        said first concave mirror (10), said convex reflective diffraction grating (20), and said second concave mirror (30) are configured such that a spectrally dispersed image of the slit (40) with said slit length A can be produced on the detection means (50) with an image length B, said slit length A and image length B defining a demagnification such that :

$$demagnification\ factor\ = \frac{A}{B}$$

said demagnification factor being higher than 1.3, **characterized in that**:
said slit having a slit F-number of 3.6 and
said first matrix detection means (50) having a detection means F-number equal to 2.1.

2. Spectral imaging device (100) according to previous claim, **characterized in that** said reflective surface (21) having a complex invariant shape class is defined in a three dimensional space with the equation:

$$z = \frac{c\,r^2}{1 + \sqrt{1 - (1+k)c^2 r^2}} + \sum_{i=1}^{N=2,3} \alpha_i r^{2i} + \sum_{i=1}^{M} A_i Z_i(\rho, \varphi)$$

where z is the surface sag (z-coordinate) at the point of polar coordinate $(r,\varphi)$, c is the curvature (the reciprocal of the radius of curvature) and k is the conic constant, $\alpha_i$ is the $i^{th}$ even aspherical coefficients, $A_i$ is the coefficient on the $i^{th}$ Zernike polynomial, $z_i$ is the $i^{th}$ Zernike polynomial, $\rho$ is the normalized radial coordinate such that $\rho = \frac{r}{R}$ where R is the useful radius of the surface, preferably M being an integer comprised between 4 and 36.

3. Spectral imaging device (100) according to any one of the preceding claims **characterized in that** said diffractive grating (22) is a blazed grating.

4. Spectral imaging device (100) according to previous claim **characterized in that** said blazed grating has a constant line spacing d, said line spacing being comprised between 50 $\mu$m and 0.75 $\mu$m and more preferably comprised between 30 $\mu$m and 8 $\mu$m.

5. Spectral imaging device (100) according to previous claim **characterized in that** said blazed grating has a step height h comprised between 2.5 $\mu$m and 0.1 $\mu$m, more preferably comprised between 1.5 $\mu$m and 0.15 $\mu$m, and even more preferably between 1 $\mu$m and 0.2 $\mu$m.

6. Spectral imaging device (100) according to claim 4 **characterized in that** said line spacing d being comprised between 1.5 $\mu$m and 0.75 $\mu$m, more preferably between 1.1 $\mu$m and 0.9 $\mu$m, and even more preferably d being equal to 1 $\mu$m.

7. Spectral imaging device (100) according to any one of the preceding claims when depending on claim 3 **characterized in that** said blazed grating comprises a first grating portion (26) with a first blaze angle $\theta_{B1}$ and a second grating portion (27) with a second blaze angle $\theta_{B2}$, said first blaze angle $\theta_{B1}$ being different than said second blaze angle $\theta_{B2}$, preferably said blazed grating further comprises a third grating portion with a third blaze angle, and even more preferably said blazed grating further comprises a fourth grating portion with a fourth blaze angle.

8. Spectral imaging device (100) according to previous claim **characterized in that** said first grating portion (26) and said second grating portion (27) covering essentially said reflective surface (21), said first grating portion (26) covering a surface $S_1$ and said second grating covering a surface $S_2$ such that the distribution of $S_1$ and $S_2$ over said reflective surface is such that:

$$0.2 < \frac{S_1}{S_2} < 5.$$

9. Spectral imaging device (100) according to previous claim, **characterized in that** said second grating surface portion (27) is surrounded by said first grating surface portion (26) on said reflective surface (21).

10. Spectral imaging device (100) according to any of previous claims, **characterized in that**

it further comprises a second matrix detection means (55) and **in that**

it further comprises a dichroic filter (60) positioned between said second concave mirror (30) and said first matrix detection means (50) such that:

> - a first spectral range fraction (61) of said light beam after its diffraction by said convex reflective diffraction grating (20) and its reflection by said second concave mirror (30) is transmitted toward said first matrix detection means (50) for being detected by this one (50) and
> - a second spectral range fraction (62) of said light beam after its diffraction by said convex reflective diffractive grating (20) and its reflection by said second concave mirror (30) is reflected toward said second matrix detection means (55) for being detected by this one (55).

11. Spectral imaging device according to claim 10 where the first spectral range fraction of said light beam is comprised in the SWIR wavelength range, in particular from 950 nm to 2450 nm, and originating from a diffracted order - 1 or +1 and the second spectral range fraction of said light beam is comprised in the VNIR wavelength range, in particular from 400nm to 950 nm, and originating from a diffracted order -2 or +2, said diffracted orders being diffracted orders generated by the convex diffraction grating (20).

12. Spectral imaging device (100) according to any one of the preceding claims **characterized in that** it further comprises a mirror (5) such that it is positioned to reflect said light beam from said slit (10) to said first concave mirror (20).

13. Spectral imaging device (100) according to any one of the preceding claims **characterized in that** said slit (40) having a slit F-number and said first (50) or second (55) detection means having a detection means F-number such that:

$$demagnification\ factor = \frac{slit\ F-number}{detection\ means\ F-number},$$

said slit F-number being 3.6 and said detection means F-number 2.1 for said demagnification factor being larger than 1.5.

14. Spectral imaging device (100) according to any one of the preceding claims **characterized in that** said matrix detection means (50) comprises a matrix of pixels defining pixel lines and pixel columns, pixel columns defining spatial position and pixel lines defining spectral information, said matrix detection means comprising at least 200 pixel lines, preferably at least 400, and even more preferably at least 800.

15. Spectral imaging device (100) according to any one of the preceding claims **characterized in that** it can be included in a rectangular parallelepiped having main dimensions of 250 mm x 200 mm x 100 mm, preferably of 250mmx250mmx250mm.

**Patentansprüche**

1. Vorrichtung für spektrale Bildgebung (100), umfassend:

> - einen Schlitz (40) zum Lenken eines Teils eines Quellenlichtstrahls in die Vorrichtung für spektrale Bildgebung (100), wobei der Schlitz eine Schlitzlänge A aufweist;
> - einen ersten konkaven Spiegel (10);
> - ein konvexes reflektierendes Beugungsgitter (20), das eine reflektierende Oberfläche (21) umfasst, auf der ein Beugungsgitter (22) gebildet ist;
> - einen zweiten konkaven Spiegel (30);
> - erste Matrixerfassungsmittel (50);
>
> wobei der Schlitz (40) und der erste konkave Spiegel (10) derart konfiguriert sind, dass der Teil eines Quellenlichts, der vom Schlitz (40) in die Vorrichtung für spektrale Bildgebung (100) eintritt, zum ersten konkaven Spiegel (10) hin gelenkt wird;
> wobei der erste konkave Spiegel (10) und das konvexe reflektierende Beugungsgitter (20) derart konfiguriert sind, dass der erste konkave Spiegel (10) in der Lage ist, einen vom Schlitz (40) ausgehenden Lichtstrahl zum konvexen reflektierenden Beugungsgitter (20) hin zu reflektieren;

wobei das konvexe reflektierende Beugungsgitter (20) und der zweite konkave Spiegel (30) derart konfiguriert sind, dass das konvexe reflektierende Beugungsgitter (20) in der Lage ist, einfallendes Licht vom konvexen reflektierenden Beugungsgitter (20) zum zweiten konkaven Spiegel (30) hin zu reflektieren und zu beugen;

wobei der zweite konkave Spiegel (30) und die Matrixerfassungsmittel (50) derart konfiguriert sind, dass der zweite konkave Spiegel (30) in der Lage ist, einfallendes Licht vom zweiten konkaven Spiegel (30) zu den ersten Matrixerfassungsmitteln (50) hin zu reflektieren;

wobei die reflektierende Oberfläche (21) des konvexen reflektierenden Beugungsgitters (20) durch eine komplexe invariante Formklasse definiert ist;

wobei

der erste konkave Spiegel (10), das konvexe reflektierende Beugungsgitter (20) und der zweite konkave Spiegel (30) derart konfiguriert sind, dass ein spektral dispergiertes Bild des Schlitzes (40) mit der Schlitzlänge A mit einer Bildlänge B auf den Erfassungsmitteln (50) erzeugt werden kann, wobei die Schlitzlänge A und die Bildlänge B eine Verkleinerung derart definieren, dass:

$$\text{Verkleinerungsfaktor} = \frac{A}{B}$$

wobei der Verkleinerungsfaktor größer als 1,3 ist,

**dadurch gekennzeichnet, dass**:
der Schlitz eine F-Zahl des Schlitzes von 3,6 aufweist, und
die ersten Matrixerfassungsmittel (50) eine F-Zahl der Erfassungsmittel von gleich 2,1 aufweisen.

2. Vorrichtung für spektrale Bildgebung (100) nach dem vorstehenden Anspruch, **dadurch gekennzeichnet, dass** die reflektierende Oberfläche (21), die eine komplexe invariante Formklasse aufweist, in einem dreidimensionalen Raum mit folgender Gleichung definiert ist:

$$z = \frac{c\, r^2}{1 + \sqrt{1 - (1+k)c^2 r^2}} + \sum_{i=1}^{N=2,3} \alpha_i r^{2i} + \sum_{i=1}^{M} A_i Z_i(\rho, \varphi)$$

wobei z die Oberflächendurchbiegung (z-Koordinate) an dem Punkt der Polarkoordinate $(r, \varphi)$ ist, c die Krümmung (der Kehrwert des Krümmungsradius) ist und k die konische Konstante ist, $\alpha_i$ der i-te gerade asphärische Koeffizient ist, $A_i$ der Koeffizient des i-ten Zernike-Polynoms ist, $Z_i$ das i-te Zernike-Polynom ist, $\rho$ die normalisierte radiale Koordinate derart ist, dass $\rho = \frac{r}{R}$, wobei R der nutzbare Radius der Oberfläche ist, wobei M bevorzugt eine ganze Zahl im Bereich zwischen 4 und 36 ist.

3. Vorrichtung für spektrale Bildgebung (100) nach einem der vorstehenden Ansprüche, **dadurch gekennzeichnet, dass** das Beugungsgitter (22) ein Blazegitter ist.

4. Vorrichtung für spektrale Bildgebung (100) nach dem vorstehenden Anspruch, **dadurch gekennzeichnet, dass** das Blazegitter einen konstanten Linienabstand d aufweist, wobei der Linienabstand im Bereich zwischen 50 $\mu$m und 0,75 $\mu$m, und bevorzugter im Bereich zwischen 30 $\mu$m und 8 $\mu$m, liegt.

5. Vorrichtung für spektrale Bildgebung (100) nach dem vorstehenden Anspruch, **dadurch gekennzeichnet, dass** das Blazegitter eine Stufenhöhe h im Bereich zwischen 2,5 $\mu$m und 0,1 $\mu$m, bevorzugter im Bereich zwischen 1,5 $\mu$m und 0,15 $\mu$m, und noch bevorzugter zwischen 1 $\mu$m und 0,2 $\mu$m, aufweist.

6. Vorrichtung für spektrale Bildgebung (100) nach Anspruch 4, **dadurch gekennzeichnet, dass** der Linienabstand d im Bereich zwischen 1,5 $\mu$m und 0,75 $\mu$m, bevorzugter zwischen 1,1 $\mu$m und 0,9 $\mu$m liegt, und noch bevorzugter d gleich 1 $\mu$m ist.

7. Vorrichtung für spektrale Bildgebung (100) nach einem der vorstehenden Ansprüche in Abhängigkeit von Anspruch 3, **dadurch gekennzeichnet, dass** das Blazegitter einen ersten Gitterabschnitt (26) mit einem ersten Blazewinkel $\theta_{B1}$

und einen zweiten Gitterabschnitt (27) mit einem zweiten Blazewinkel $\theta_{B2}$ umfasst, wobei sich der erste Blazewinkel $\theta_{B1}$ vom zweiten Blazewinkel $\theta_{B2}$ unterscheidet, bevorzugt wobei das Blazegitter weiter einen dritten Gitterabschnitt mit einem dritten Blazewinkel umfasst, und noch bevorzugter wobei das Blazegitter weiter einen vierten Gitterabschnitt mit einem vierten Blazewinkel umfasst.

8. Vorrichtung für spektrale Bildgebung (100) nach dem vorstehenden Anspruch, **dadurch gekennzeichnet, dass** der erste Gitterabschnitt (26) und der zweite Gitterabschnitt (27) im Wesentlichen die reflektierende Oberfläche (21) bedecken, wobei der erste Gitterabschnitt (26) eine Oberfläche $S_1$ bedeckt und das zweite Gitter eine Oberfläche $S_2$ derart bedeckt, dass die Verteilung von $S_1$ und $S_2$ über der reflektierenden Oberfläche derart ist, dass:

$$0{,}2 < \frac{S_1}{S_2} < 5.$$

9. Vorrichtung für spektrale Bildgebung (100) nach dem vorstehenden Anspruch, **dadurch gekennzeichnet, dass** der zweite Gitteroberflächenabschnitt (27) auf der reflektierenden Oberfläche (21) vom ersten Gitteroberflächenabschnitt (26) umgeben ist.

10. Vorrichtung für spektrale Bildgebung (100) nach einem der vorstehenden Ansprüche, **dadurch gekennzeichnet, dass**

es weiter ein zweites Matrixerfassungsmittel (55) umfasst, und dadurch, dass
es weiter einen dichroitischen Filter (60) umfasst, der zwischen dem zweiten konkaven Spiegel (30) und den ersten Matrixerfassungsmitteln (50) derart positioniert ist, dass:

- ein erster Spektralbereichsanteil (61) des Lichtstrahls nach seiner Beugung durch das konvexe reflektierende Beugungsgitter (20) und seiner Reflexion durch den zweiten konkaven Spiegel (30) zu den ersten Matrixerfassungsmitteln (50) hin übertragen wird, um von diesen (50) erfasst zu werden, und
- ein zweiter Spektralbereichsanteil (62) des Lichtstrahls nach seiner Beugung durch das konvexe reflektierende Beugungsgitter (20) und seiner Reflexion durch den zweiten konkaven Spiegel (30) zum zweiten Matrixerfassungsmittel (55) hin reflektiert wird, um von diesem (55) erfasst zu werden.

11. Vorrichtung für spektrale Bildgebung nach Anspruch 10, wobei der erste Spektralbereichsanteil des Lichtstrahls im Bereich des SWIR-Wellenlängenbereichs liegt, insbesondere von 950 nm bis 2450 nm, und aus einer Beugungsordnung -1 oder +1 stammt, und der zweite Spektralbereichsanteil des Lichtstrahls im Bereich des VNIR-Wellenlängenbereichs liegt, insbesondere von 400 nm bis 950 nm, und aus einer Beugungsordnung -2 oder +2 stammt, wobei es sich bei den Beugungsordnungen um Beugungsordnungen handelt, die vom konvexen Beugungsgitter (20) erzeugt werden.

12. Vorrichtung für spektrale Bildgebung (100) nach einem der vorstehenden Ansprüche, **dadurch gekennzeichnet, dass** sie weiter einen Spiegel (5) derart umfasst, dass sie positioniert ist, um den Lichtstrahl vom Schlitz (10) zum ersten konkaven Spiegel (20) zu reflektieren.

13. Vorrichtung für spektrale Bildgebung (100) nach einem der vorstehenden Ansprüche, **dadurch gekennzeichnet, dass** der Schlitz (40) eine F-Zahl des Schlitzes aufweist, und die ersten (50) oder zweiten (55) Erfassungsmittel eine F-Zahl des Erfassungsmittels derart aufweisen, dass:

$$Verkleinerungsfaktor = \frac{F - Zahl\ Schlitz}{F - Zahl\ Erfassungsmittel},$$

wobei die F-Zahl des Schlitzes 3,6 und die F-Zahl des Erfassungsmittels 2,1 beträgt, damit der Verkleinerungsfaktor größer als 1,5 ist.

14. Vorrichtung für spektrale Bildgebung (100) nach einem der vorstehenden Ansprüche, **dadurch gekennzeichnet, dass** die Matrixerfassungsmittel (50) eine Matrix aus Pixeln umfassen, die Pixelzeilen und Pixelspalten definieren, wobei Pixelspalten die räumliche Position definieren und Pixelzeilen spektrale Informationen definieren, wobei die Matrixerfassungsmittel mindestens 200 Pixelzeilen, bevorzugt mindestens 400, und noch bevorzugter mindestens 800, umfassen.

**15.** Vorrichtung für spektrale Bildgebung (100) nach einem der vorstehenden Ansprüche, **dadurch gekennzeichnet, dass** sie in ein rechteckiges Parallelepiped eingeschlossen sein kann, das Hauptabmessungen von 250 mm x 200 mm x 100 mm, bevorzugt 250 mm x 250 mm x 250 mm, aufweist.

**Revendications**

**1.** Dispositif d'imagerie spectrale (100) comprenant :

- une fente (40) pour diriger une partie d'un faisceau lumineux source à l'intérieur dudit dispositif d'imagerie spectrale (100), ladite fente présentant une longueur de fente A ;
- un premier miroir concave (10) ;
- un réseau de diffraction réfléchissant convexe (20) comprenant une surface réfléchissante (21) sur laquelle est formé un réseau de diffraction (22) ;
- un second miroir concave (30) ;
- un premier moyen de détection matricielle (50) ;

ladite fente (40) et ledit premier miroir concave (10) étant configurés de manière telle que ladite partie d'une lumière source entrant dans le dispositif d'imagerie spectrale (100) depuis ladite fente (40) est dirigée vers ledit premier miroir concave (10) ;

ledit premier miroir concave (10) et ledit réseau de diffraction réfléchissant convexe (20) étant configurés de manière telle que ledit premier miroir concave (10) est capable de réfléchir un faisceau lumineux provenant de ladite fente (40) vers ledit réseau de diffraction réfléchissant convexe (20) ;

ledit réseau de diffraction réfléchissant convexe (20) et ledit second miroir concave (30) étant configurés de manière telle que ledit réseau de diffraction réfléchissant convexe (20) est capable de réfléchir et de diffracter la lumière entrante provenant dudit réseau de diffraction réfléchissant convexe (20) vers ledit second miroir concave (30) ;

ledit second miroir concave (30) et ledit moyen de détection matricielle (50) étant configurés de manière telle que ledit second miroir concave (30) est capable de réfléchir la lumière entrante provenant dudit second miroir concave (30) vers ledit premier moyen de détection matricielle (50) ;

dans lequel ladite surface réfléchissante (21) dudit réseau de diffraction réfléchissant convexe (20) est définie par une classe de forme invariante complexe ;

dans lequel

ledit premier miroir concave (10), ledit réseau de diffraction réfléchissant convexe (20) et ledit second miroir concave (30) sont configurés de manière telle qu'une image dispersée spectralement de la fente (40) avec ladite longueur de fente A peut être produite sur le moyen de détection (50) avec une longueur d'image B, lesdites longueur de fente A et longueur d'image B définissant un dégrossissement tel que :

$$\text{facteur de dégrossissement} = \frac{A}{B}$$

ledit facteur de dégrossissement étant supérieur à 1,3,

**caractérisé en ce que** :
ladite fente présente un nombre F de fente de 3,6 et
ledit premier moyen de détection matricielle (50) présente un nombre F de moyen de détection égal à 2,1.

**2.** Dispositif d'imagerie spectrale (100) selon la revendication précédente, **caractérisé en ce que** ladite surface réfléchissante (21) présentant une classe de forme invariante complexe est définie dans un espace tridimensionnel avec l'équation :

$$z = \frac{c\,r^2}{1 + \sqrt{1 - (1+k)c^2 r^2}} + \sum_{i=1}^{N=2,3} \alpha_i r^{2i} + \sum_{i=1}^{M} A_i Z_i(\rho, \varphi)$$

où z est l'affaissement de surface (coordonnée z) au point de coordonnées polaires $(r, \varphi)$, c est la courbure (la réciproque du rayon de courbure) et k est la constante conique, $\alpha_i$ est le $i^{\text{ème}}$ coefficient asphérique pair, $A_i$ est le coefficient sur le $i^{\text{ème}}$ polynôme de Zernike, $Z_i$ est le $i^{\text{ème}}$ polynôme de Zernike, $\rho$ est la coordonnée radiale normalisée telle que $\rho = \dfrac{r}{R}$ où R est le rayon utile de la surface, de préférence M étant un nombre entier compris entre 4 et 36.

3. Dispositif d'imagerie spectrale (100) selon l'une quelconque des revendications précédentes, **caractérisé en ce que** ledit réseau diffractif (22) est un réseau blazé.

4. Dispositif d'imagerie spectrale (100) selon la revendication précédente, **caractérisé en ce que** ledit réseau blazé présente un espacement linéaire constant d, ledit espacement linéaire étant compris entre 50 μm et 0,75 μm et plus préférentiellement compris entre 30 μm et 8 μm.

5. Dispositif d'imagerie spectrale (100) selon la revendication précédente, **caractérisé en ce que** ledit réseau blazé présente une hauteur d'échelon h comprise entre 2,5 μm et 0,1 μm, plus préférentiellement comprise entre 1,5 μm et 0,15 μm, et encore plus préférentiellement entre 1 μm et 0,2 μm.

6. Dispositif d'imagerie spectrale (100) selon la revendication 4, **caractérisé en ce que** ledit espacement linéaire d est compris entre 1,5 μm et 0,75 μm, plus préférentiellement entre 1,1 μm et 0,9 μm, et encore plus préférentiellement d est égal à 1 μm.

7. Dispositif d'imagerie spectrale (100) selon l'une quelconque des revendications précédentes lorsqu'elle dépend de la revendication 3, **caractérisé en ce que** ledit réseau blazé comprend une première partie de réseau (26) avec un premier angle de blaze $\theta_{B1}$ et une deuxième partie de réseau (27) avec un deuxième angle de blaze $\theta_{B2}$, ledit premier angle de blaze $\theta_{B1}$ étant différent dudit deuxième angle de blaze $\theta_{B2}$, préférentiellement ledit réseau blazé comprend en outre une troisième partie de réseau avec un troisième angle de blaze, et encore plus préférentiellement ledit réseau blazé comprend en outre une quatrième partie de réseau avec un quatrième angle de blaze.

8. Dispositif d'imagerie spectrale (100) selon la revendication précédente, **caractérisé en ce que** ladite première partie de réseau (26) et ladite deuxième partie de réseau (27) couvrent essentiellement ladite surface réfléchissante (21), ladite première partie de réseau (26) couvre une surface $S_1$ et ladite deuxième partie de réseau couvre une surface $S_2$ de manière telle que la distribution de $S_1$ et de $S_2$ sur ladite surface réfléchissante est telle que :

$$0{,}2 < \frac{S_1}{S_2} < 5.$$

9. Dispositif d'imagerie spectrale (100) selon la revendication précédente, **caractérisé en ce que** ladite seconde partie de surface de réseau (27) est entourée par ladite première partie de surface de réseau (26) sur ladite surface réfléchissante (21).

10. Dispositif d'imagerie spectrale (100) selon l'une quelconque des revendications précédentes, **caractérisé en ce qu'**il comprend en outre un second moyen de détection matricielle (55) et **en ce qu'**il comprend en outre un filtre dichroïque (60) positionné entre ledit second miroir concave (30) et ledit premier moyen de détection matricielle (50) de manière telle que :

   - une première fraction de plage spectrale (61) dudit faisceau lumineux après sa diffraction par ledit réseau de diffraction réfléchissant convexe (20) et sa réflexion par ledit second miroir concave (30) est transmise vers ledit premier moyen de détection matricielle (50) pour être détectée par celui-ci (50), et
   - une seconde fraction de plage spectrale (62) dudit faisceau lumineux après sa diffraction par ledit réseau diffractif réfléchissant convexe (20) et sa réflexion par ledit second miroir concave (30) est réfléchie vers ledit second moyen de détection matriciel (55) pour être détectée par celui-ci (55).

11. Dispositif d'imagerie spectrale selon la revendication 10, dans lequel la première fraction de plage spectrale dudit faisceau lumineux est comprise dans la plage de longueurs d'onde SWIR, notamment de 950 nm à 2450 nm, et provient d'un ordre diffracté -1 ou +1, et la seconde fraction de plage spectrale dudit faisceau lumineux est comprise dans la plage de longueurs d'onde VNIR, en particulier de 400 nm à 950 nm, et provient d'un ordre diffracté -2 ou +2, lesdits ordres diffractés étant des ordres diffractés générés par le réseau de diffraction convexe (20).

**12.** Dispositif d'imagerie spectrale (100) selon l'une quelconque des revendications précédentes, **caractérisé en ce qu'**il comprend en outre un miroir (5) tel qu'il est positionné pour réfléchir ledit faisceau lumineux depuis ladite fente (10) vers ledit premier miroir concave (20).

**13.** Dispositif d'imagerie spectrale (100) selon l'une quelconque des revendications précédentes, **caractérisé en ce que** ladite fente (40) présente un nombre F de fente et ledit premier (50) ou second (55) moyen de détection présente un nombre F de moyen de détection tel que :

$$facteur\ de\ dégrossissement = \frac{nombre\ F\ de\ fente}{nombre\ F\ de\ moyen\ de\ détection},$$

ledit nombre F de fente étant de 3,6 et ledit nombre F de moyen de détection de 2,1 pour ledit facteur de dégrossissement étant supérieur à 1,5.

**14.** Dispositif d'imagerie spectrale (100) selon l'une quelconque des revendications précédentes, **caractérisé en ce que** ledit moyen de détection matricielle (50) comprend une matrice de pixels définissant des lignes de pixels et des colonnes de pixels, les colonnes de pixels définissant une position spatiale et les lignes de pixels définissant des informations spectrales, ledit moyen de détection matricielle comprenant au moins 200 lignes de pixels, préférentiellement au moins 400, et encore plus préférentiellement au moins 800.

**15.** Dispositif d'imagerie spectrale (100) selon l'une quelconque des revendications précédentes, **caractérisé en ce qu'**il peut être inclus dans un parallélépipède rectangle présentant des dimensions principales de 250 mm x 200 mm x 100 mm, préférentiellement de 250 mm x 250 mm x 250 mm.

*Fig.1*

100

10

30

50

40

20

*Fig. 2*

*Fig.3*

EP 3 841 363 B1

100

*Fig. 4*

*F i g . 5*

*F i g . 6*

*F i g . 7a*

*F i g . 7b*